# EUROPEAN PATENT SPECIFICATION

(11) **EP 3 588 712 B1**
(45) Date of publication and mention of the grant of the patent: **08.03.2023**
(21) Application number: 18179797.8
(22) Date of filing: 26.06.2018
(51) Int. Cl.: H02G 5/10

(54) **A COPPER CONDUCTOR**
KUPFERLEITER
CONDUCTEUR EN CUIVRE

(43) Date of publication of application: 01.01.2020
(73) Proprietor: ABB Schweiz AG, 5400 Baden (CH)
(72) Inventor: Bihary, Jozef, 27253 Graham (US); Skuci, Michal, 602 00 Brno (CZ); Hemek, Pavel, 603 00 Brno (CZ); Kalina, Emil, 628 00 Brno (CZ); Pernica, Roman, 664 08 Blazovice (CZ)
(74) Representative: Maiwald GmbH

(56) References cited:
- EP-A1- 2 894 744
- WO-A1-2015/042927
- CN-U- 204 496 946
- CN-U- 204 947 525
- DE-A1-102012 008 550
- US-A- 2 964 586
- Abb: "Medium voltage products - KOKS transformer", , 30 October 2016 (2016-10-30), pages 1-108, XP055808422, Retrieved from the Internet: URL:http://nbaco.com/dw/UniSafeABB.pdf [retrieved on 2021-05-27]

## Description

### FIELD OF THE INVENTION

The present invention relates to a copper conductor.

### BACKGROUND OF THE INVENTION

Medium voltage (MV) switching gear uses copper bars as conductors, such as busbars. These are usually made as flat profiles, e.g. 80mm x 10mm, that are cut to the length needed. For high currents, multiples of two, three or more flat profiles can be used. For the highest currents, D shaped profiles have been used. The dimension and size of the cross section of the conductor is usually chosen to fit the limits of conductor temperature, or temperature rise, when maximal rated current is passed through. Cylinder shaped conductors for ring core transformers, such as KOKS type transformers, also have dimensions chosen in a similar manner. Such arrangements have limitations of performance and cost.

WO2015/042927A1 describes that a main bus-bar consists of a first elongated flat portion and a second elongated flat portion. A longitudinal side of the first elongated flat portion and a longitudinal side of the second elongated flat portion are arranged to be joined with each other at a predetermined angle. The thickness of each of the first elongated flat portion and the second elongated flat portion is non-uniform. Hence the skin effect and proximity effect caused by current carried in the main bus-bar can be reduced greatly. The main bus-bar can be connected to a branch bus-bar directly or be connected to a branch bus-bar by a transfer connector in a bus-bar assembly or a bus-bar system. CN204496946U discloses an efficient form radiating copper bus busbar.

### SUMMARY OF THE INVENTION

Therefore, it would be advantageous to have an improved conductor for MV switchgear.

The object of the present invention is solved with the subject matter of the independent claims, wherein further embodiments are incorporated in the dependent claims.

In an aspect, there is provided a copper conductor as defined in appended claim 1. In a second aspect, there is provided a medium voltage switchgear comprising at least one copper conductor according to the first aspect.

The following examples provide exemplar details regarding how certain technical features can be combined.

In a first example of the disclosure, there is provided a copper conductor, the copper conductor comprising:
- at least one body extending in a longitudinal axis.

The at least one body comprises connection means at a first position of the longitudinal axis and comprises connection means at a second position of the longitudinal axis. Along at least a part of the longitudinal axis between the first position and the second position of the at least one body, the at least one body comprises cooling means.

In this manner, the conductivity and cooling of a system such as a medium voltage switchgear is improved. The skin effect is taken into account to improve conductivity, with more copper being placed at positions of highest current density in the system such as busbars of switchgear operating in a three-phase arrangement. The body of the conductor having cooling means provides for improved cooling, leading to reduced temperatures through improved convection cooling, and even improved radiative cooling.

In this way, the total amount of copper used in the conductor can be decreased leading to cost savings.

According to the inventiion, the at least one body comprises at least one substantially planar sub-body.

In this manner, sheet copper metal can be used to form the conductor further leading to cost benefits.

In an example, the at least one body comprises at least one arcuate sub-body extending from the at least one substantially planar sub-body.

In other words, the copper conductor such as a busbar can have a "D" profile, and sheet metal can be bent to form the conductor.

According to the invention, the at least one body is one body and wherein the cooling means comprises a plurality of ridges.

Thus, a plurality of ridges, with grooves between the ridges, is used to increase the conductor surface area and lead to improved cooling through improved convective cooling and improved radiative cooling.

According to the invention, the plurality of ridges extend in the direction of the longitudinal axis.

According to the invention the plurality of ridges are substantially parallel to each other.

The plurality of ridges are formed on the at least one substantially planar sub-body.

The cooling means comprises a plurality of ventilation holes through the at least one body.

Thus, convective air cooling is improved and the overall surface area is additionally increased leading to improved radiative cooling as well as to improved convective cooling.

In an example, the at least body comprises a plurality of bodies.

By forming a conductor from a number of bodies the overall area of the cooling surfaces having ventilation holes can be significantly increased leading to improved cooling, whilst maintaining a required cross sectional area, and at the same time minimizing the amount of copper required.

In an example, the plurality of ventilation holes through the at least one body comprises at least one ventilation hole through a first body of the plurality of bodies and comprises at least one ventilation hole through a second body of the plurality of bodies. The at least one ventilation hole through the first body is substantially aligned with the at least one ventilation hole through the second body.

In an example, the plurality of ventilation holes through the at least one body comprises a plurality of ventilation holes through the first body and comprises a plurality of ventilation holes through the second body. The plurality of ventilation holes through the first body are substantially aligned with the plurality of ventilation holes through the second body.

By aligning the ventilation holes in this manner, air convective cooling is improved because air can more efficiently flow through the structure extracting heat.

In an example, the first and second connection means are mounting holes.

In a second example of the disclosure, there is provided a medium voltage switchgear comprising at least one copper conductor according to the first example of the disclosure.

In a third example of the disclosure, there is provided a copper conductor for a ring core transformer. The conductor comprises a hollow core extending along a longitudinal axis of the conductor surrounded by an inner surface of the copper conductor.

Thus, cooling is provided leading to reduced temperatures, and a reduced amount of copper can be utilized also saving costs.

In an example, a cross section of the conductor perpendicular to the longitudinal axis at a position along the longitudinal axis has an outer perimeter of an outer surface of the copper conductor and has an inner perimeter of the inner surface of the copper conductor surrounding the hollow core, and wherein a total length of the outer perimeter is less than a total length of the inner perimeter.

In an example, the inner surface of the copper conductor comprises a plurality of ridges extending in the direction of the longitudinal axis.

In a fourth example of the disclsosure, there is provided a ring core transformer comprising a copper conductor according to the third aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawings. Figures 1 to 4 and 6 to 9 are not a part of claimed invention. The embodiment of figure 5 is covered by the claimed invention:
Fig. 1 shows a schematic representation of an example of a copper conductor for a medium voltage switchgear;
Fig. 2 shows an example of a copper conductor for a medium voltage switchgear;
Fig. 3 shows an example of a copper conductor for a medium voltage switchgear;
Fig. 4 shows an example of a copper conductor for a medium voltage switchgear;
Fig. 5 shows an example of a copper conductor for a medium voltage switchgear;
Fig. 6 shows an example of a copper conductor for a medium voltage switchgear;
Fig. 7 shows an example of a copper conductor for a medium voltage switchgear;
Fig. 8 shows an example of a copper conductor for a ring core transformer; and
Fig. 9 shows an example of a copper conductor for a ring core transformer.

### DETAILED DESCRIPTION OF EMBODIMENTS

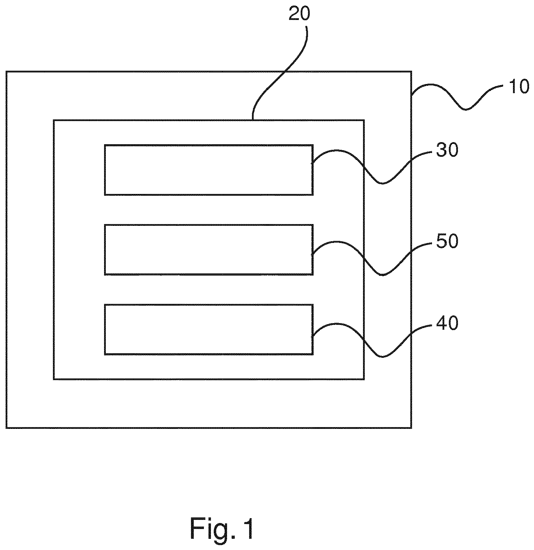

Fig. 1 shows an example of a copper conductor 10 for a medium voltage switchgear.

The copper conductor 10 comprises at least one body 20 extending in a longitudinal axis. The at least one body 20 comprises connection means 30 at a first position of the longitudinal axis. The at least one body also comprises connection means 40 at a second position of the longitudinal axis. Along at least a part of the longitudinal axis between the first position and the second position of the at least one body, the at least one body comprises cooling means 50.

In an example, the copper conductor is a busbar, of a medium voltage switchgear.

In an example, the ventilation holes are circular.

In an example, the ventilation holes are slots.

The at least one body comprises a plurality of sub-bodies.

In an example, not covered by the appended claims, a combination of copper conductors with aluminium coolers is provided.

The plurality of ventilation holes through the at least one body comprises at least one ventilation hole through a first body of the plurality of bodies and comprises at least one ventilation hole through a second body of the plurality of bodies. In this example, the at least one ventilation hole through the first body can be substantially aligned with the at least one ventilation hole through the second body. However, in other examples the ventilation holes are offset one from the other.

The plurality of ventilation holes through the at least one body comprises a plurality of ventilation holes through the first body and comprises a plurality of ventilation holes through the second body. In this example, the plurality of ventilation holes through the first body can substantially aligned with the plurality of ventilation holes through the second body. However, in other examples , not covered by the claims, the ventilation holes are offset one from the other.

According to an example, the first and second connection means are mounting holes.

The copper conductor as described with respect to Fig. 1 can be used in a medium voltage switchgear, for example for the busbars. Thus, in an example there is provided a medium voltage switchgear (not shown) comprising at least one copper conductor as described with respect to Fig. 1.

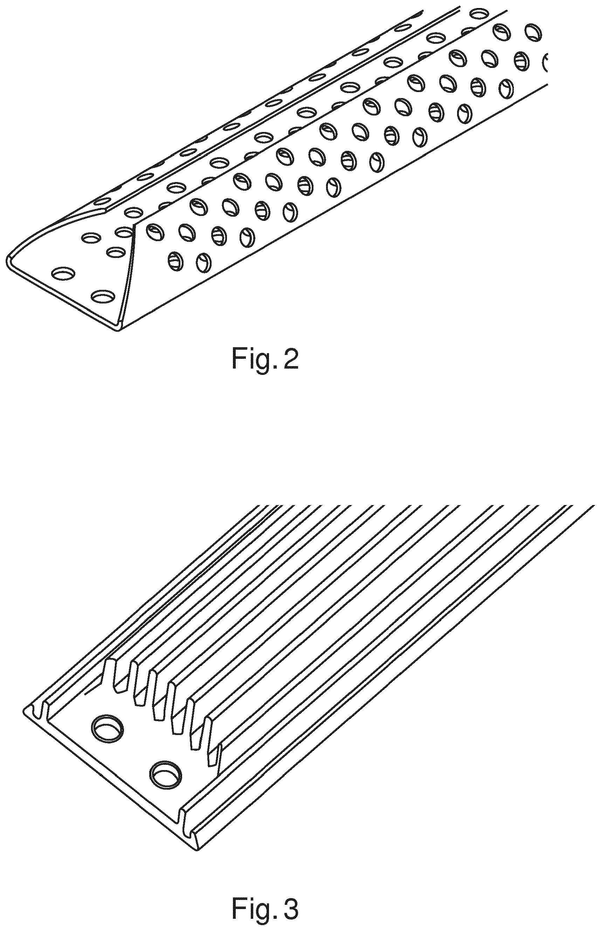

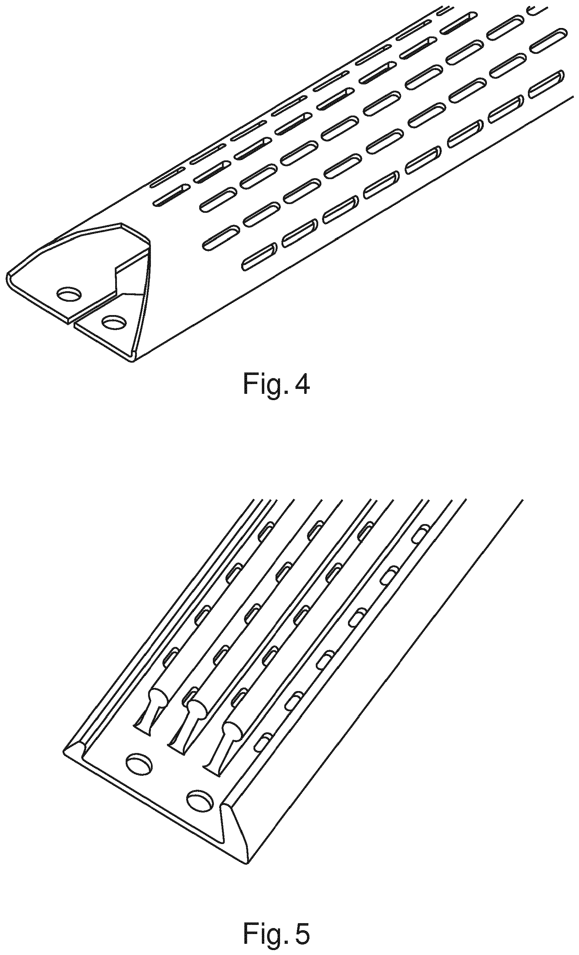

The copper conductor described above with respect to Fig. 1 is now described in more detail with reference to Figs 2-7. The embodiments shown in figures 2 to 4 and 6 to 7 are not covered by the claims. The embodiment of figure 5 is covered by the claims.

Fig. 2 shows an example of a copper conductor suitable for use in a medium voltage switchgear, for example as a busbar. The copper conductor has connection means at both ends, in form of two adjacent holes. Only the connection means at one end are shown in Fig. 2. The copper conductor is formed from sheet metal, and cooling means in the form of circular ventilation holes have been punched through the copper sheet. The copper sheet has then been bent on two sides to form two arcuate sides extending from a planar section, and as such forms a D profile. The holes punched through the copper sheet can be different sizes and be at higher or lower separation from one another with respect to that shown in Fig. 2. The holes can also be cut through the sheet, rather than being punched through, and can be shapes other than the circles shown, such as squares, slots or any other suitable shape that is punched or cut through the sheet.

Fig. 3 shows an example of a copper conductor suitable for use in a medium voltage switchgear, for example as a busbar. The copper conductor has connection means at both ends, in form of two adjacent holes. Only the connection means at one end are shown in Fig. 3. The copper conductor has a solid profile and has cooling means in the form of a number of ridges (or grooves) extending along the length (longitudinal axis of the conductor). The number of ridges, their spacing from one another, their height, and width can be different to that shown in Fig. 3.

Fig. 4 shows an example of a copper conductor suitable for use in a medium voltage switchgear, for example as a busbar. The copper conductor has connection means at both ends, in form of two adjacent holes. Only the connection means at one end are shown in Fig. 4. The copper conductor is formed from sheet metal, and cooling means in the form of clotted ventilation holes have been punched through the copper sheet. The copper conductor is similar to that shown in Fig. 2, and could have circular ventilation holes or other shaped holes. Also, in this case the copper sheet has then been bent such that a D shape is again formed, but the end sections now form a planar part rather than the central section as for Fig. 2. The holes can be formed as described with respect to Fig. 2.

Fig. 5 shows a copper conductor suitable for use in a medium voltage switchgear, for example as a busbar. The copper conductor has connection means at both ends, in form of two adjacent holes. Only the connection means at one end are shown in Fig. 4. The copper conductor has a solid profile and has cooling means in the form of a number of ridges (or grooves) extending along the length (longitudinal axis of the conductor), in a similar manner to that shown in Fig. 3. However, to augment the cooling effect from the ridges the conductor also has a number of ventilation holes, which in this example are slots, but can be circular holes or holes of any suitable shape.

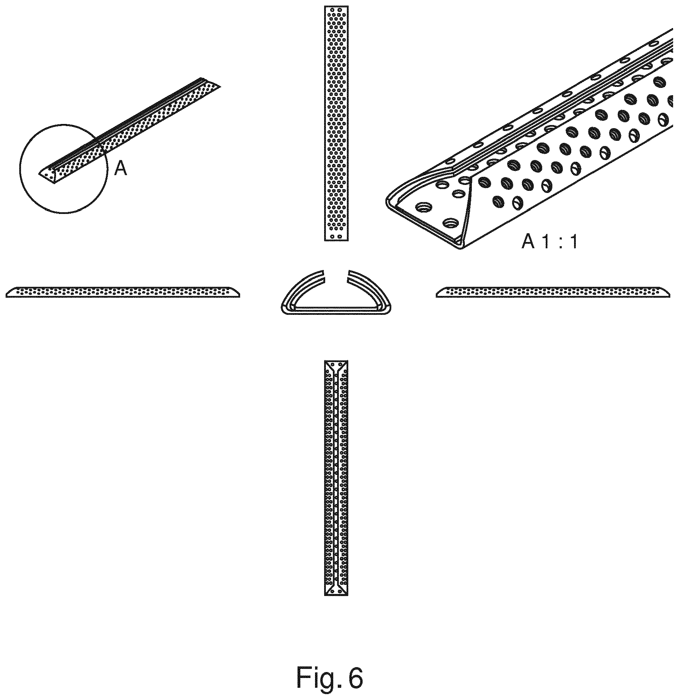

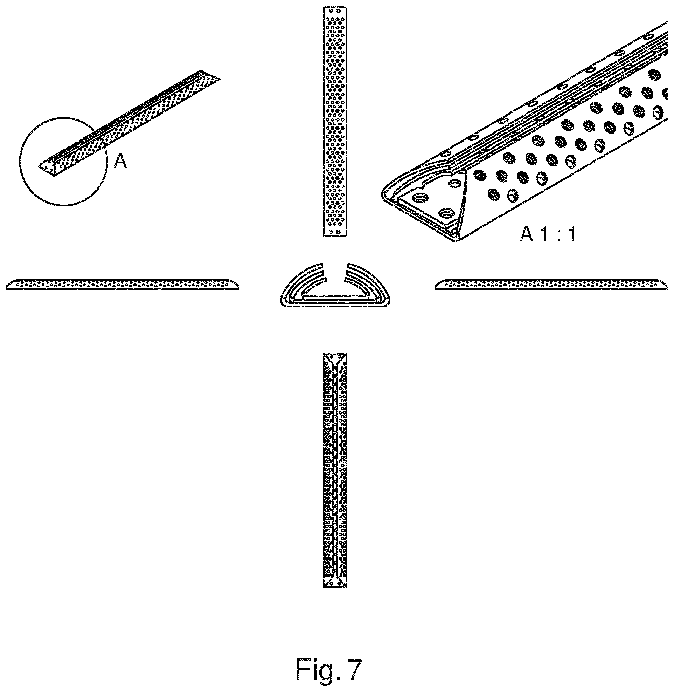

Figs. 6 and 7 show examples of copper conductors suitable for use in a medium voltage switchgear, for example as a busbar. Each copper conductor has a number (two and three for Fig. 6 and Fig. 7 respectively) of separate elements (sub-body) as shown for Fig. 2, but that are stacked within each other. Each has connection means at both ends, in form of two adjacent holes thereby enabling the whole assembly to be securely mounted within the switchgear. Only the connection means at one end are shown. As shown in Fig. 2, cooling means in the form of ventilation holes have been punched through each individual element of the and in these examples, the holes have been punched into each element such that they line up when assembled together.

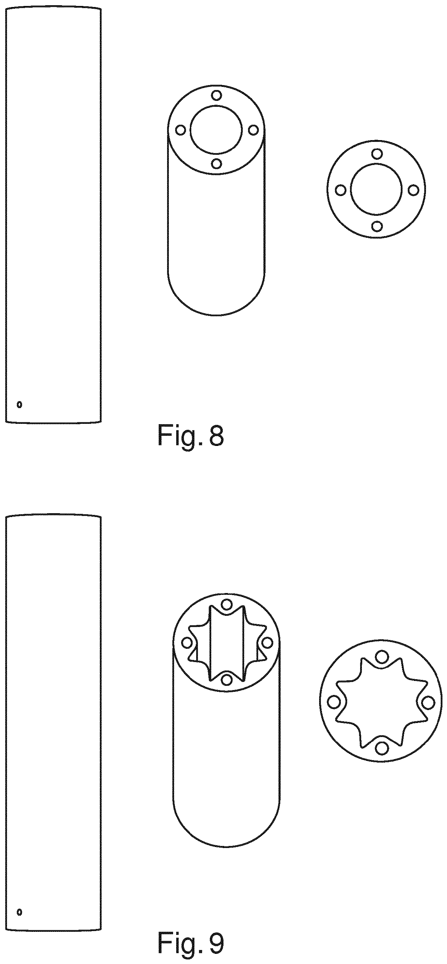

As described above, cooling means has been used for a copper conductor, useable for example with a MV switchgear. This principle has also been used for a copper conductor for a ring core transformer, not covered by the claims, as exemplified in Figs 8 and 9. The cylindrical shaped conductor can be used in a ring-core transformed, such as a KOKS transformer (not shown), and the cooling means has been applied by making the core of the conductor hollow.

Thus, in an example of the copper conductor for a ring core transformer, the conductor comprises a hollow core extending along a longitudinal axis of the conductor surrounded by an inner surface of the copper conductor.

In an example, not covered by the claims, of the copper conductor for a ring core transformer the inner surface of the copper conductor comprises a plurality of ridges extending in the direction of the longitudinal axis.

In another example, not covered by the claims, of the copper conductor for a ring core transformer a cross section of the conductor perpendicular to the longitudinal axis at a position along the longitudinal axis has an outer perimeter of an outer surface of the copper conductor and has an inner perimeter of the inner surface of the copper conductor surrounding the hollow core. A total length of the outer perimeter is less than a total length of the inner perimeter.

In further detail, in Fig. 8 the inner surface of the cylindrical conductor surrounding the hollow core has a piecewise continuous circular cross section, and the available surface area to improve cooling has been further increased by providing the inner surface of the conductor with ridges running down the inside of the conductor as shown in Fig. 9. A circular cross section conductor is shown in Figs. 8-9, however the described principles apply for other cross sections, such as elliptical.

In an example, a ring core transformer has a copper conductor as described with respect to any of Figs. 8-9.

## Claims

1. A copper conductor (10) for a medium voltage switchgear, the copper conductor comprising:
- at least one body (20) extending in a longitudinal axis;
wherein, the at least one body comprises connection means (30) at a first position of the longitudinal axis and comprises connection means (40) at a second position of the longitudinal axis;
wherein the at least one body comprises at least one substantially planar sub-body;
wherein, along at least a part of the longitudinal axis between the first position and the second position of the at least one body, the at least one body comprises cooling means (50);
wherein the cooling means comprises a plurality of ridges and a plurality of ventilation holes through the at least one substantially planar sub-body;
wherein the plurality of ridges are substantially parallel to each other, and wherein the plurality of ridges are formed on the at least one substantially planar sub-body;
wherein the plurality of ridges extend in the direction of the longitudinal axis;
wherein the plurality of ventilation holes are arranged in lines between the plurality of ridges and in lines either side of the two outermost ridges, and wherein the lines of the plurality of ventilation holes are arranged in the direction of the longitudinal axis.

2. Copper conductor according to claim 1, wherein the at least one body comprises at least one arcuate sub-body extending from the at least one substantially planar sub-body.

3. Copper conductor according to any of claims 1-2, wherein the at least body comprises a plurality of bodies.

4. Copper conductor according to claim 3, wherein the plurality of ventilation holes through the at least one body comprises at least one ventilation hole through a first body of the plurality of bodies and comprises at least one ventilation hole through a second body of the plurality of bodies, and wherein the at least one ventilation hole through the first body is substantially aligned with the at least one ventilation hole through the second body.

5. Copper conductor according to claim 4, wherein the plurality of ventilation holes through the at least one body comprises a plurality of ventilation holes through the first body and comprises a plurality of ventilation holes through the second body, and wherein the plurality of ventilation holes through the first body are substantially aligned with the plurality of ventilation holes through the second body.

6. Copper conductor according to any of claims 1-5, wherein the first and second connection means are mounting holes.

7. A medium voltage switchgear comprising at least one copper conductor according to any of claims 1-6.

## Patentansprüche

1. Kupferleiter (10) für eine Mittelspannungsschaltanlage, wobei der Kupferleiter Folgendes umfasst:
mindestens einen Körper (20), der sich in einer Längsachse erstreckt;
wobei der mindestens eine Körper eine Verbindungseinrichtung (30) an einer ersten Position der Längsachse umfasst und eine Verbindungseinrichtung (40) an einer zweiten Position der Längsachse umfasst;
wobei der mindestens eine Körper mindestens einen im Wesentlichen planen Teilkörper umfasst;
wobei der mindestens eine Körper entlang zumindest eines Teils der Längsachse zwischen der ersten Position und der zweiten Position des mindestens einen Körpers eine Kühleinrichtung (50) umfasst;
wobei die Kühleinrichtung mehrere Rippen und mehrere Belüftungsbohrungen durch den mindestens einen im Wesentlichen planen Teilkörper umfasst;
wobei die mehreren Rippen im Wesentlichen parallel zueinander sind und wobei die mehreren Rippen auf dem mindestens einen im Wesentlichen planen Teilkörper ausgebildet sind;
wobei sich die mehreren Rippen in die Richtung der Längsachse erstrecken;
wobei die mehreren Belüftungsbohrungen in Linien zwischen den mehreren Rippen und in Linien auf beiden Seiten der zwei äußersten Rippen angeordnet sind und wobei die Linien der mehreren Belüftungsbohrungen in die Richtung der Längsachse angeordnet sind.

2. Kupferleiter nach Anspruch 1, wobei der mindestens eine Körper mindestens einen bogenförmigen Teilkörper umfasst, der sich von dem mindestens einen im Wesentlichen planen Teilkörper erstreckt.

3. Kupferleiter nach einem der Ansprüche 1-2, wobei der mindestens eine Körper mehrere Körper umfasst.

4. Kupferleiter nach Anspruch 3, wobei die mehreren Belüftungsbohrungen durch den mindestens einen Körper mindestens eine Belüftungsbohrung durch einen ersten Körper der mehreren Körper umfassen und mindestens eine Belüftungsbohrung durch einen zweiten Körper der mehreren Körper umfassen und wobei die mindestens eine Belüftungsbohrung durch den ersten Körper im Wesentlichen mit der mindestens einen Belüftungsbohrung durch den zweiten Körper ausgerichtet ist.

5. Kupferleiter nach Anspruch 4, wobei die mehreren Belüftungsbohrungen durch den mindestens einen Körper mehrere Belüftungsbohrungen durch den ersten Körper umfassen und mehrere Belüftungsbohrungen durch den zweiten Körper umfassen und wobei die mehreren Belüftungsbohrungen durch den ersten Körper im Wesentlichen mit den mehreren Belüftungsbohrungen durch den zweiten Körper ausgerichtet sind.

6. Kupferleiter nach einem der Ansprüche 1-5, wobei die erste und zweite Verbindungseinrichtung Montagebohrungen sind.

7. Mittelspannungsschaltanlage, umfassend mindestens einen Kupferleiter nach einem der Ansprüche 1-6.

## Revendications

1. Conducteur en cuivre (10) pour un appareillage de commutation moyenne tension, le conducteur en cuivre comprenant :
- au moins un corps (20) s'étendant le long d'un axe longitudinal ;
dans lequel, l'au moins un corps comprend un moyen de raccordement (30) à un premier emplacement de l'axe longitudinal et comprend un moyen de raccordement (40) à un second emplacement de l'axe longitudinal ;
dans lequel l'au moins un corps comprend au moins un sous-corps sensiblement plan ;
dans lequel, le long d'au moins une partie de l'axe longitudinal entre le premier emplacement et le second emplacement de l'au moins un corps, l'au moins un corps comprend un moyen de refroidissement (50) ;
dans lequel le moyen de refroidissement comprend une pluralité de saillies et une pluralité de trous de ventilation traversant l'au moins un sous-corps sensiblement plan ;
dans lequel la pluralité de saillies sont sensiblement parallèles les unes aux autres, et dans lequel la pluralité de saillies sont formées sur l'au moins un sous-corps sensiblement plan ;
dans lequel la pluralité de saillies s'étendent dans la direction de l'axe longitudinal ;
dans lequel la pluralité de trous de ventilation sont agencés en lignes entre la pluralité de saillies et en lignes de chaque côté des deux saillies extérieures extrêmes, et dans lequel les lignes de la pluralité de trous de ventilation sont agencées dans la direction de l'axe longitudinal.

2. Conducteur en cuivre selon la revendication 1, dans lequel l'au moins un corps comprend au moins un sous-corps arqué s'étendant à partir de l'au moins un sous-corps sensiblement plan.

3. Conducteur en cuivre selon l'une quelconque des revendications 1 et 2, dans lequel l'au moins un corps comprend une pluralité de corps.

4. Conducteur en cuivre selon la revendication 3, dans lequel la pluralité de trous de ventilation traversant l'au moins un corps comprend au moins un trou de ventilation traversant un premier corps de la pluralité de corps et comprend au moins un trou de ventilation traversant un deuxième corps de la pluralité de corps, et dans lequel l'au moins un trou de ventilation traversant le premier corps est sensiblement aligné avec l'au moins un trou de ventilation traversant le deuxième corps.

5. Conducteur en cuivre selon la revendication 4, dans lequel la pluralité de trous de ventilation traversant l'au moins un corps comprend une pluralité de trous de ventilation traversant le premier corps et comprend une pluralité de trous de ventilation traversant le deuxième corps, et dans lequel la pluralité de trous de ventilation traversant le premier corps sont sensiblement alignés avec la pluralité de trous de ventilation traversant le deuxième corps.

6. Conducteur en cuivre selon l'une quelconque des revendications 1 à 5, dans lequel les premier et second moyens de raccordement sont des trous de montage.

7. Appareillage de commutation moyenne tension comprenant au moins un conducteur en cuivre selon l'une quelconque des revendications 1 à 6.
